# EUROPEAN PATENT APPLICATION

(11) **EP 1 833 241 A1**
(43) Date of publication of application: **12.09.2007**
(21) Application number: 07103628.9
(22) Date of filing: 06.03.2007
(51) Int. Cl.: H04N 5/225, G03B 11/04

(54) **Lens protecting apparatus for cellular phone camera**

(30) Priority: 10.03.2006 KR 20060022640
(71) Applicant: Samsung Electro-Mechanics Co., Ltd, Suwon Gyunggi-do 443-743 (KR)
(72) Inventor: Kim, Hyo Young, Yeongtong-gu, Suwon, Gyunggi-do 443-756 (KR); Kim, Seung Bum, 204-1103 Gyum-Maeul Wossung Apt., Anyang-si, 431-070, Gyunggi-do (KR); Kim, Dae Young 104-304, Yugong Greenvil. Apt., Suwon, 443-792, Gyunggi-do (KR); Ma, Seog Jin, 443-848, Gyunggi-do (KR)
(74) Representative: Knowles, James Atherton

(57) **Abstract**

Disclosed herein is a lens protecting apparatus for a cellular phone camera. The lens protecting apparatus of the present invention includes a base, which has an opening, through which a lens of the camera is exposed, a coil, which is mounted to the base and is supplied with current, a lens cover, which is rotatably mounted to the base to open or close the opening, and a magnet, which is mounted to the lens cover to form a magnetic field around the coil. The magnet is moved by force generated by the current and the magnetic field, and the lens cover opens or closes the opening using the magnet, to thus move it.

## Description

### CROSS REFERENCE TO RELATED APPLICATION

This application claims the benefit of Korean Patent Application No. 2006-0022640, filed March 10, 2006, entitled "Lens protecting apparatus for a camera of the cellular phone", which is hereby incorporated by reference in its entirety into this application.

### BACKGROUND OF THE INVENTION

### 1. Field of the Invention

The present invention relates generally to apparatuses for protective lenses for cellular phone cameras and, more particularly, to a lens protecting apparatus for a cellular phone camera which automatically covers and uncovers a lens of the camera, which is exposed outside, thus protecting the lens.

### 2. Description of the Related Art

As well known to those skilled in the art, a cellular phone is an apparatus which is portable by a user and makes it possible for the user to communicate with counterparts. Recently, to meet the needs of users, cellular phones that have functions of taking, transmitting and receiving pictures as well as having sound signal transmitting and receiving functions and an internet connection function have been developed and sold. Such cellular phones are provided with cameras for taking pictures.

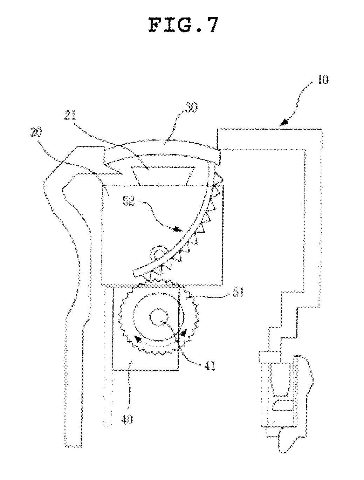

However, because the lens of the camera of such a cellular phone is usually exposed outside, there are problems in that the lens is scratched by dust or foreign substances and is not strongly resistant to outside physical impact. In an effort to overcome the above problems, apparatuses for protecting the lenses of cellular phone cameras have been proposed. A representative example of such lens protecting apparatuses is shown in FIG. 7.

As shown in FIG. 7, a lens protecting apparatus 10 includes a drive source 40, a connection gear 51, a rack gear 52 and a protective cover 30.

The drive source 40 generates drive force for driving the lens protecting apparatus 10. When predetermined pressure is applied, the drive source 40 rotates a rotating shaft 41 thereof.

The connection gear 51 is firmly fastened to the rotating shaft 41, and engages with the rack gear 52 to transmit rotating force to the rack gear 52.

The rack gear 52 opens or closes the protective cover 30 using the rotating force, which is transmitted from the drive source 40 through the connection gear 51. For this, the rack gear 52 is coupled at one end thereof to the protective cover 30, and engages with the connection gear 51.

The protective cover 30 serves to protect the lens 21 of the camera 20 and uncovers or covers the lens 21 of the camera 20 when the rack gear 52 is rotated.

However, in the conventional lens protecting apparatus 10, because a device, such as a motor, which is relatively large and heavy, is used as the drive source 40, it is difficult to miniaturize the cellular phone, and the weight of the cellular phone is increased.

### SUMMARY OF THE INVENTION

Accordingly, the present invention has been made keeping in mind the above problems occurring in the prior art, and an object of the present invention is to provide a lens protecting apparatus for a cellular phone camera which automatically covers and uncovers the lens of the camera using electromagnetic force, thus reducing the volume and weight of the cellular phone.

In an aspect, the present invention provides a lens protecting apparatus for a cellular phone camera, including: a protecting means for protecting a lens of the camera; and driving means for driving the protecting means to open or close the lens, wherein the driving means is driven by force generated both by a electric current and by a magnetic field.

Preferably, the magnetic field may be perpendicular to a direction in which the electric current flows.

Furthermore, a direction in which the driving means is driven may be changed by changing a direction in which the electric current flows.

In another aspect, the present invention provides a lens protecting apparatus for a cellular phone camera, including: a base, having an opening through which a lens of the camera is exposed; a coil mounted to the base, the coil being supplied with an electric current; a lens cover rotatably mounted to the base to open or close the opening; and a magnet mounted to the lens cover to form a magnetic field around the coil, wherein the magnet is moved by force generated both by the electric current and by the magnetic field, and the lens cover is moved by the magnet to thus cover or uncover the opening.

Preferably, the magnet may be disposed above the coil such that the magnetic field is perpendicular to a direction in which the electric current flows.

Furthermore, the magnet may be linearly moved.

In addition, the magnet may be moved along an arc.

As well, a direction in which the magnet is moved may be changed by changing the direction in which the electric current flows, so that the magnet is reciprocally movable.

The lens protecting apparatus may further include a mounting member coupling the magnet to the lens cover. The mounting member may be operated in conjunction with the lens cover.

The lens protecting apparatus may further include a pair of holding members provided at opposite sides of the coil to pull and hold the magnet.

Furthermore, the magnet may be in noncontact with the holding members.

### BRIEF DESCRIPTION OF THE DRAWINGS

The above and other objects, features and advantages of the present invention will be more clearly understood from the following detailed description taken in conjunction with the accompanying drawings, in which:
FIG. 1 is an exploded perspective view of a lens protecting apparatus, according to a first embodiment of the present invention;
FIG. 2 is a plan view of the lens protecting apparatus of FIG. 1;
FIG. 3 is a schematic view showing automatic opening and closing processes using electromagnetic force in the lens protecting apparatus of FIG. 1;
FIG. 4 is an exploded perspective view of a lens protecting apparatus, according to a second embodiment of the present invention;
FIG. 5 is a plan view of the lens protecting apparatus of FIG. 4;
FIG. 6 is a schematic view showing automatic opening and closing processes using electromagnetic force in the lens protecting apparatus of FIG. 4; and
FIG. 7 is a schematic view showing a conventional lens protecting apparatus.

### DESCRIPTION OF THE PREFERRED EMBODIMENTS

Hereinafter, lens protecting apparatuses for cellular phone cameras according to preferred embodiments of the present invention will be described in detail with reference to the attached drawings.

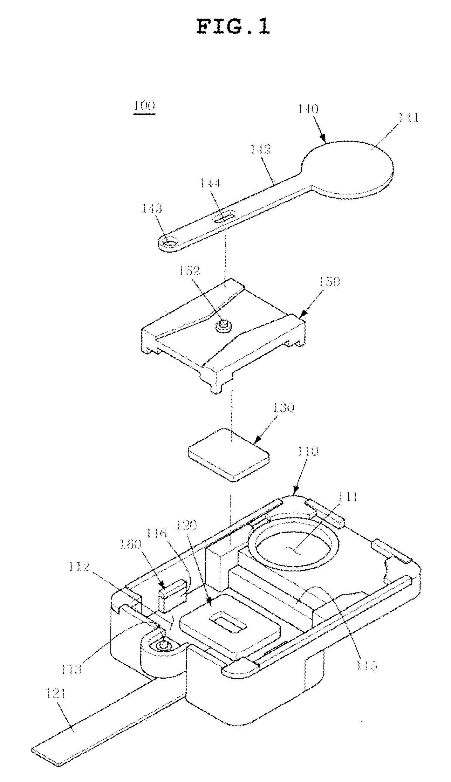

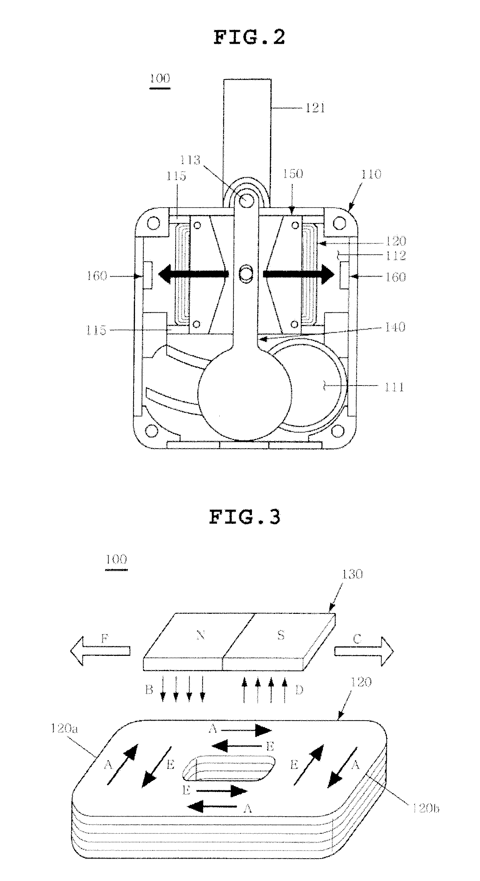

As shown in FIGS. 1 and 2, the lens protecting apparatus 100 for a cellular phone camera according to the first embodiment of the present invention includes a base 110, a coil 120, a magnet 130, a lens cover 140, a mounting member 150 and holding members 160.

The base 110 is a part to which elements of the lens protecting apparatus 100 are mounted. The base 110 has an opening 111, through which the lens of the camera, which is not shown in the drawings, is exposed outside, and a coupling part 112, to which the coil 120 is mounted.

The opening 111 is formed in the base 110 at a position displaced from the center of the base 110 towards the perimeter thereof.

The coupling part 112 is stepped relative to the part in which the opening 111 is formed, such that the coil 120 is disposed at a position lower than the opening 111. The coupling part 112 has a support shaft 113, which rotatably supports the lens cover 140, a seating part 115, on which the mounting member 150 is seated, and support protrusions 116, which supports the respective holding members 160.

The support shaft 113 is provided in a sidewall of the coupling part 112 at a height equal to the position of the opening 111, such that the lens cover 140 is maintained horizontal.

The seating part 115 is linearly provided in the lateral direction of the coupling part 112 and restricts the range within which the mounting member 150 is moved.

The support protrusions 116 are provided at positions adjacent to the respective opposite ends of the seating part 115. The holding members 160, which react to the magnet 130 to generate attractive force, are provided at positions adjacent to the upper ends of respective support protrusions 116. Here, it is preferable that the support protrusions 116 be spaced apart from the seating part 115 by distances such that the magnet 130 does not contact the holding members 116.

The coil 120 is supplied with an electric current. The coil 120 is made of electroconductive material, such as copper, and is wound a predetermined number of times into a ring shape. In the first embodiment, it is preferable that the coil 120 have a rectangular cross-section such that directions of the electric current flowing along opposite sides, which face each other, are opposite to each other.

Furthermore, the coil 120 is mounted to the coupling part 112 of the base 110, and is electrically connected to a flexible printed circuit board 121 so that the coil 120 is supplied with the electric current from the main body of the cellular phone, which is not shown in the drawings.

The magnet 130 serves to form a magnetic field around the coil 120, and is disposed just above the coil 120 such that the magnetic field is perpendicular to the direction in which the electric current flows. The magnet 130 is linearly movable using electromagnetic force generated by the magnetic field and the electric current flowing through the coil 120.

Furthermore, the magnet 130 is a typical bar magnet 130, which emits magnetic force lines from an N-pole to an S-pole to form a magnetic field. In the first embodiment of the present invention, a rectangular bar magnet 130, having N and S poles is used as the magnet 130.

Here, because the magnet 130 is disposed just above the coil 120, the magnet 130 is movable using electromagnetic force, which is formed both by magnetic force lines of the N-pole, which is perpendicularly emitted to the coil 120, and by magnetic force lines of the S-pole, which perpendicularly enters the magnet 130 from the coil 120.

Furthermore, because the magnet 130 forms the constant magnetic field, the direction of the electromagnetic force can be changed by changing the direction of the electric current applied to the coil 120. Therefore, the direction in which the magnet 130 is moved can be changed.

The lens cover 140 serves to protect the lens of the camera. The lens cover 140 is rotatably mounted to the base 110, to openably close the opening 111, and includes a head part 141 and a body part 142.

The head part 141 of the lens cover 140 is disposed ahead of the opening 111 to openably close the opening 111.

The body part 142 integrally extends from the head part 141, and is mounted to the base 110. A coupling hole 143 is formed through one end of the body part 142, so that the body part 142 is rotatably coupled to the support shaft 113 of the base 110 through the coupling hole 143. Furthermore, a connection slot 144 is formed through the body part 142 so that the lens cover 140 is connected to the mounting member 150 through the connection slot 144 and is thus moved in conjunction with the mounting member 150. Preferably, the connection slot 144 extends a predetermined length in the longitudinal direction of the body part 142.

The mounting member 150 couples the magnet 130 to the lens cover 140. The mounting member 150 is coupled to the upper surface of the magnet 130 such that the lower surface of the magnet 130, which faces the coil 120 is exposed outside the mounting member 150. A connection protrusion 152, which is inserted into the connection slot 144 of the lens cover 140 so that the mounting member 150 is coupled to the lens cover 140, is provided on the upper surface of the mounting member 150.

The mounting member 150 is movably seated on the seating part 115 of the base 110, and is reciprocally moved in a straight line along with the magnet 130 in the coupling part 112.

Here, because the mounting member 150 is connected to the lens cover 140 through the connection protrusion 152, when the mounting member 150 is reciprocally moved in a straight line, the lens cover 140 is also reciprocally rotated depending on the motion of the mounting member 150, thus openably closing the opening 111.

The two holding members 160 serve to pull and hold the magnet 130, and are provided on respective support protrusions 116 of the base 110 on opposite sides of the coil 120. The holding members 160 are made of metal which is influenced by the magnet 130 to generate attractive force.

As such, although the support protrusions 116 are spaced apart from the seating part 115 by predetermined distances so that the holding members 160 do not contact the magnet 130, the magnet 130 can be pulled and held by the attractive force between the holding member 160 and the magnet 130.

Thus, even when no electric current is applied to the coil 120, so that no electromagnetic force is generated, the lens cover 140 can be maintained at a position at which the opening 111 is opened or closed by the lens cover 140, thus preventing electricity from being wasted.

The operation of the lens protecting apparatus 100 having the above-mentioned construction will be described herein below with reference to FIG. 3.

As shown in FIG. 3, the electric current is applied to the coil 120 in the direction designated by the arrow A.

At this time, magnetic force lines, which are perpendicular to the electric current that flows through a portion 120a of the coil 120 in the direction of the arrow A, are emitted from the N-pole of the magnet 130 in the direction designated by the arrow B. Thus, electromagnetic force is applied to the magnet 130 in the direction of the arrow C, both by the electric current that flows in the direction of the arrow A and by the magnetic force lines oriented in the direction of the arrow B. Therefore, the magnet 130 is linearly moved in the direction of the arrow C.

Furthermore, electromagnetic force is applied to the magnet 130 in the direction of the arrow C both by the electric current that flows through a portion 120b of the coil 120 in the direction of the arrow A, and by magnetic force lines that enter the S-pole of the magnet 130 in the direction of the arrow D, thus moving the magnet 130 in the direction of the arrow C.

Conversely, when the electric current is applied to the coil 120 in the direction of the arrow E, electromagnetic force is applied to the magnet 130 in the direction of the arrow F, and thus the magnet 130 is moved in the direction of the arrow F. As such, the lens protecting apparatus 100 can reversibly cover the lens of the camera using the above-mentioned principle.

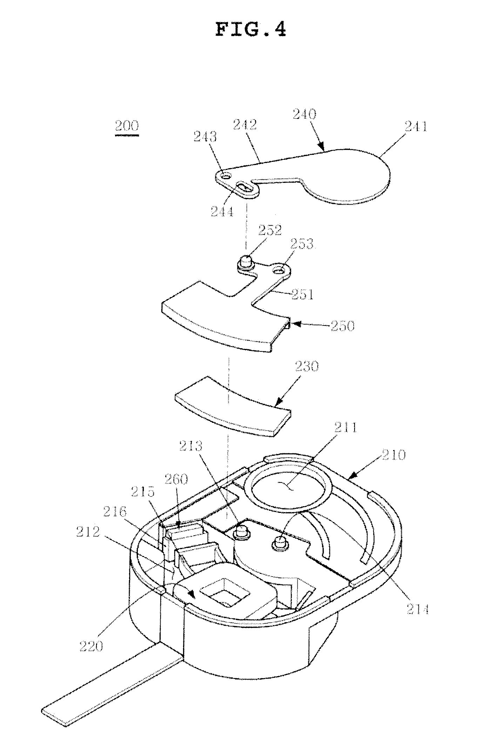

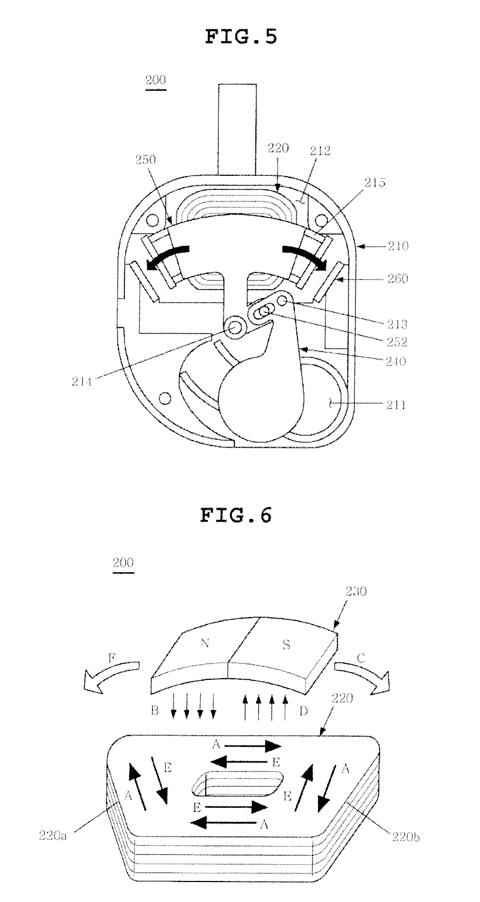

Although the magnet has been illustrated as being reciprocally moved in a straight line in the first embodiment, the magnet may be constructed such that it is reciprocally moved in a curved line. A lens protecting apparatus having such a structure is shown in FIGS. 4 and 5.

As shown in FIGS. 4 and 5, the lens protecting apparatus 200 according to the second embodiment of the present invention includes a base 210, a coil 220, a magnet 230, a lens cover 240, a mounting member 250 and holding members 260.

Explanation of parts of the general construction of the second embodiment that are similar to corresponding parts in the first embodiment is deemed unnecessary.

The base 210 is the part to which elements of the lens protecting apparatus 200 are mounted. The base 210 has an opening 211, through which a lens of the camera, which is not shown in the drawings, is exposed outside, and a support shaft 213, which rotatably supports the lens cover 240, a coupling shaft 214, which rotatably supports the mounting member 250, and a coupling part 212, to which the coil 220 is mounted.

The support shaft 213 is provided between the opening 211 and the coupling part 212, and is disposed at a height equal to the position of the opening 211 such that the lens cover 240 is maintained horizontal. The coupling shaft 214 is disposed between the opening 211 and the coupling part 212 at a position just adjacent to the support shaft 213.

The coupling part 212 is stepped relative to the part in which the opening 211 is formed, such that the coil 220 is disposed at a position lower than the opening 211. The coupling part 212 has a seating part 215, on which the mounting member 250 is seated, and support protrusions 216, which supports the respective holding members 260.

The seating part 215 has a curved shape and is oriented in the lateral direction of the coupling part 212. The seating part 215 restricts the range within which the mounting member 250 can move.

The coil 220 is supplied with an electric current. The coil 220 is made of electroconductive material, such as copper, and is wound a predetermined number of times into a ring shape. In the second embodiment, it is preferable that the coil 220 have a trapezoidal cross-section such that directions of the electric current in sides that face each other are opposite to each other.

The magnet 230 serves to form a magnetic field around the coil 2 and is movable in an arc using electromagnetic force, which is formed by the magnetic field and by the electric current that flows through the coil 220. A bar magnet 230, which is curved so as to have a predetermined radius of curvature, is used as the magnet 230 of the second embodiment of the present invention.

The lens cover 240 serves to protect the lens of the camera. The lens cover 240 is rotatably mounted to the base 210 to reversibly cover the opening 211, and includes a head part 241 and a body part 242.

The head part 241 of the lens cover 240 is disposed ahead of the opening 211 to reversibly cover the opening 211.

The body part 242 integrally extends from the head part 241 and is mounted to the base 210. A coupling hole 243 is formed through one end of the body part 242, so that the body part 242 is rotatably coupled to the support shaft 213 of the base 210 through the coupling hole 243. Furthermore, a connection slot 244 is formed through the body part 242, so that the lens cover 240 is connected to the mounting member 250 through the connection slot 244, and is thus moved in conjunction with the mounting member 250. Preferably, the connection slot 244 extends a predetermined length in the lateral direction of the body part 242.

The mounting member 250 couples the magnet 230 to the lens cover 240. The mounting member 250 is coupled to the upper surface of the magnet 230 such that the lower surface of the magnet 230, which faces the coil 220, is exposed outside the mounting member 250. The mounting member 250 is curved to have a shape corresponding to the shape of the magnet 230.

Furthermore, the mounting member 250 has an extension part 251, which extends a predetermined length from an intermediate portion of the mounting member 250. The extension part 251 has an insert hole 253, into which the coupling shaft 214 of the base 210 is rotatably inserted, and a connection protrusion 252, which is inserted into the connection slot 244 of the lens cover 240.

In addition, the mounting member 250 is movably seated on the seating part 215 of the base 210, and is reciprocally moved along a curved line, along with the magnet 230 in the coupling part 212.

Here, because the mounting member 250 is connected to the lens cover 240 through the connection protrusion 252, when the mounting member 250 is reciprocally moved along a curved line, the lens cover 240 is reciprocally rotated depending on the motion of the mounting member 250, thus reversibly covering the opening 211.

The operation of the lens protecting apparatus 200 having the above-mentioned construction will be described herein below with reference to FIG. 6.

As shown in FIG. 6, the electric current is applied to the coil 220 in the direction designated by the arrow A.

At this time, magnetic force lines, which are perpendicular to the electric current that flows through a portion 220a of the coil 220 in the direction of the arrow A, are emitted from the N-pole of the magnet 230 in the direction designated by the arrow B. Thus, electromagnetic force is applied to the magnet 230 in the direction of the arrow C, both by the electric current that flows in the direction of the arrow A, and by the magnetic force lines, which are oriented in the direction of the arrow B. Therefore, the magnet 230 is moved along an arc in the direction of the arrow C.

Furthermore, electromagnetic force is applied to the magnet 230 in the direction of the arrow C, both by the electric current that flows through a portion 220b of the coil 220 in the direction of the arrow A, and by magnetic force lines, which enter the S-pole of the magnet 230 in the direction of the arrow D, thus moving the magnet 230 in the direction of the arrow C.

Conversely, when the electric current is applied to the coil 220 in the direction of the arrow E, electromagnetic force is applied to the magnet 230 in the direction of the arrow F, so that the magnet 230 is moved in the direction of the arrow F. As such, the lens protecting apparatus 200 can reversibly cover the lens of the camera using the above-mentioned principle.

As described above, the present invention provides a lens protecting apparatus for a cellular phone camera which automatically uncovers or covers the lens of the camera using electromagnetic force generated by a coil and a magnet, which are relatively small and light, thus markedly reducing the volume and weight of the cellular phone.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A lens protecting apparatus for a cellular phone camera, comprising:
a protecting means for protecting a lens of the camera; and
a driving means for driving the protecting means to open or close the lens, wherein
the driving means is driven by force generated both by an electric current and by a magnetic field.

2. The lens protecting apparatus as set forth in claim 1, wherein the magnetic field is perpendicular to a direction in which the electric current flows.

3. The lens protecting apparatus as set forth in claim 2, wherein a direction in which the driving means is driven is changed by changing a direction in which the electric current flows.

4. A lens protecting apparatus for a cellular phone camera, comprising:
a base, having an opening through which a lens of the camera is exposed;
a coil mounted to the base, the coil being supplied with a electric current;
a lens cover rotatably mounted to the base to open or close the opening; and
a magnet mounted to the lens cover to form a magnetic field around the coil,
wherein
the magnet is moved by force generated both by the electric current and by the magnetic field, and the lens cover is moved by the magnet to thus cover or uncover the opening.

5. The lens protecting apparatus as set forth in claim 4, wherein the magnet is disposed above the coil such that the magnetic field is perpendicular to a direction in which the electric current flows.

6. The lens protecting apparatus as set forth in claim 5, wherein the magnet is linearly moved.

7. The lens protecting apparatus as set forth in claim 5, wherein the magnet is moved along an arc.

8. The lens protecting apparatus as set forth in claim 5, wherein a direction in which the magnet is moved is changed by changing the direction in which the electric current flows, so that the magnet is reciprocally movable.

9. The lens protecting apparatus as set forth in claim 4, further comprising:
a mounting member coupling the magnet to the lens cover, the mounting member being operated in conjunction with the lens cover.

10. The lens protecting apparatus as set forth in claim 4, further comprising:
a pair of holding members provided at opposite sides of the coil to pull and hold the magnet.

11. The lens protecting apparatus as set forth in claim 10, wherein the magnet is in noncontact with the holding members.
